Europäisches Patentamt

European Patent Office

Office européen des brevets

(19)

(11) Publication number: **0 093 621**
**B1**

(12) EUROPEAN PATENT SPECIFICATION

(45) Date of publication of patent specification: **07.12.88**

(51) Int. Cl.⁴: **B 01 J 23/96**

(21) Application number: **83302530.7**

(22) Date of filing: **05.05.83**

(54) A process for reactivating iridium-containing catalysts.

(30) Priority: 05.05.82 US 374975
05.05.82 US 374976
05.05.82 US 374977
05.05.82 US 374978
05.05.82 US 375229
05.05.82 US 375230

(43) Date of publication of application:
**09.11.83 Bulletin 83/45**

(45) Publication of the grant of the patent:
**07.12.88 Bulletin 88/49**

(84) Designated Contracting States:
**DE FR GB IT NL**

(56) References cited:
**EP-A-0 057 551
FR-A-2 257 337
FR-A-2 290 953
US-A-3 625 860
US-A-3 904 510
US-A-3 939 061
US-A-3 941 716
US-A-3 981 823**

(73) Proprietor: **Exxon Research and Engineering Company**
**P.O.Box 390 180 Park Avenue**
**Florham Park New Jersey 07932 (US)**

(72) Inventor: **Fung, Shun Chong**
**855 Papen Road**
**Bridgewater New Jersey (US)**
Inventor: **Rice, Richard Wayne**
**414 Rock Creek Road**
**Clemson South Carolina (US)**
Inventor: **Weissman, Walter**
**271 Lorraine Drive**
**Berkeley Heights New Jersey (US)**
Inventor: **Carter, James Leslie**
**933 St. Marks Avenue**
**Westfield New Jersey (US)**
Inventor: **Kmak, Walter Steven**
**18 Chiplou Lane**
**Scotch Plains New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

# EP 0 093 621 B1

**Description**

This invention relates to a process for reactivating an agglomerated iridium-containing catalyst involving the sequential steps of reducing agglomerated iridium oxides if present on the catalyst surface to the free metal, pretreating the catalyst surface with a halide-providing compound, preferably hydrogen chloride, in the absence of elemental oxygen, and redispersing the iridium metal by contacting with an atmosphere containing a redispersing gas selected from elemental halogen, elemental oxygen, a mixture of hydrogen halide and oxygen, or mixture thereof. Preferably, an oxygen source is also used in the redispersion step.

US—A—3939061 describes a process for reactivating a catalyst comprising iridium in an agglomerated state, wherein a coked catalyst comprising metallic iridium and platinum is first decoked by contact with an oxygen-containing gas at temperatures below 454°C and thereafter is contacted with a reducing gas to effect reduction of a substantial part of the iridium values to metallic iridium. In one of the described embodiments, the reduced catalyst is contacted, until break-through, with a 0.13 mol percent mixture of chlorine in nitrogen at 499°C, and in the next step, the catalyst is treated with a mixture of 0.13 mol percent chlorine and 0.13 mol percent oxygen, in nitrogen, for an additional thirty-three minutes. There is no disclosure or suggestion that at least a particular minimum chlorine level on the reduced catalyst should be achieved during the contact with the chlorine and nitrogen mixture and that this minimum chlorine level should be at least maintained during the subsequent step of treating the catalyst with the gas mixture containing chlorine, oxygen and nitrogen.

EP—A—57551, which was published after the priority data of the present application, describes a process wherein a coked catalyst comprising metallic iridium is at least partially decoked in an oxygen-containing atmosphere, preferably at a temperature not exceeding 538°C, and the decoked catalyst is then contacted with hydrogen at a temperature of from 204 to 593°C in order to reduce a substantial proportion of the metal values in the catalyst to their metallic state. The reduced catalyst is pretreated with a dry hydrogen halide (e.g., HCl) in the absence of any source of oxygen at a temperature of from 371 to 538°C for a period of from 0.5 to 24 hours utilizing from 0.1 to 5 weight % of hydrogen halide per unit weight of catalyst. The thus-treated reduced catalyst is contacted with an elemental halogen-containing gas (preferably a chlorine-containing gas) at a temperature of from 454 to 593°C thereby redispersing the iridium. There is no disclosure or suggestion that the halogen content of the catalyst immediately before the last-mentioned treatment with an elemental halogen-containing gas is at least at a particular minimum level which is at least maintained during the said last-mentioned treatment.

It has been found that iridium-containing catalysts containing agglomerated metallic and/or iridium oxides can be efficiently redispersed and reactivated by the use of a halide pretreatment prior to a redispersion step, both steps following decoking and reduction of the iridium oxides, if present.

The present invention provides a process for reactivating a catalyst comprising metallic iridium in an agglomerated state, which comprises the steps of:

(a) pretreating the catalyst by contact with a substantially elemental oxygen-free atmosphere comprising a halide-providing compound at a temperature of from 250 to 600°C and which compound provides halide to the catalyst at the pretreating conditions; and

(b) redispersing the pretreated catalyst from step (a) by contact, at a temperature in the range of from 450 to 600°C, with a gas-phase redispersing agent selected from elemental halogen, elemental oxygen, a mixture containing hydrogen halide and elemental oxygen, and a mixture of at least two of the foregoing, and which redispersing agent may optionally comprise water vapour, for a time sufficient to redisperse agglomerated iridium, wherein the pretreating step (a) is effected to provide on the catalyst at least 1.3 weight percent halogen, based on coke-free dry catalyst, and in the redispersing step (b) there is maintained on the catalyst a halogen content, based on coke-free dry catalyst, of at least 1.3 weight percent halogen.

The halide pretreatment step is conducted with two limitations, (1) that 1.3 weight percent or greater halide and, preferably 1.4 to 2.5 weight percent halide, taken as the coke-free, dry catalyst, and most preferably saturated with halide under the conditions used, is present on the catalyst surface after the pretreatment and maintained at or above this level up to and during the subsequent redispersion step with elemental halogen or a mixture of hydrogen halide and elemental oxygen, and (2) that during the halide pretreatment step, no elemental oxygen is present in the feedstream or is generated in situ. If this halide level is not maintained during subsequent redispersion and if elemental oxygen is present during the pretreatment, then substantially lower redispersion values will be obtained with concomitant decrease in catalyst metal surface area and activity.

The present process is applicable to a wide variety of iridium-containing catalysts and particularly to reforming catalysts employing platinum-iridium on alumina, which are completely or partially decoked.

Halide-producing compounds are used in the pretreatment step including organic halides and hydrogen halides with gaseous hydrogen chloride being the preferred hydrogen halide-generating compound used in the pretreatment and chloride levels of 1.3 weight percent of catalyst and above, on the catalyst surface are necessary to ensure effective redispersion. The halide weight percent is expressed on the basis of dry, coke-free catalyst.

The pretreatment step is conducted in the temperature range of about 250 to 600°C, and the halide

2

weight percent can be monitored, for example, by X-ray fluorescence versus known standards. Generally, with the exception of vary severely coked and agglomerated iridium-containing catalyst, the present process is capable of producing substantially decoked, highly redispersed, iridium-containing catalyst in a one-cycle treatment.

Further provided is an embodiment wherein in the redispersion step (b) the mass flow rate of elemental halogen is less than about one gram of elemental halogen per 100 grams of catalyst per hour.

A further feature of the present process is the reactivation of *coked* iridium-containing catalysts. This comprises the sequential steps prior to step (a) of:

(1) partially decoking said catalyst in an oxygen-containing atmosphere at an elevated temperature, preferably at a temperature below about 430°C and preferably for a sufficient time so that the remaining catalyst coke level is less than 1 weight percent and the iridium agglomeration on said catalyst is less than about 50 percent;

(2) reducing said catalyst from step (1) by contact with a reducing atmosphere at elevated temperature for a sufficient time to convert substantially said iridium value to metallic iridium. Thus where the agglomerated catalyst initially contains iridium oxide, said oxide may be converted substantially to metallic iridium before step (a) is carried out.

Thereafter steps (a) and (b) follow.

In the redispersion step (b) the contacting can be about 480°C or above.

A still further embodiment provided is a process for reactivating partially or completely decoked agglomerated iridium-containing catalysts, said catalysts being in series, said process further comprising the step prior to steps (a) and (b) of:

(1) reducing a first of said catalysts by contact with a reducing atmosphere at an elevated temperature for a sufficient time to convert substantially iridium value to metallic iridium; and in step (b) the contacting temperature may be about 480°C or above. Also there is a further step (c) comprising contacting a second of said catalysts, in series, with the effluent halogen/water vapour atmosphere from step (b) to decoke partially said second catalyst.

A particularly preferred embodiment is the process for reactivating partially or completely decoked agglomerated platinum-iridium on alumina catalyst containing platinum and iridium oxides further comprising the step prior to step (a) of:

(1) contacting said agglomerated catalyst with a hydrogen atmosphere at a temperature in the range of about 300 to 540°C and a pressure of about 0.1 to 2.0 MPa for a sufficient time to substantially convert said oxides of platinum and iridium to the respective metals; and in step

(a) pretreating the catalyst from step (1) by contact with an elemental oxygen-free atmosphere comprising hydrogen chloride at a temperature in the range of about 300 to 540°C and a pressure of about 0.1 to 2.0 MPa to saturate the catalyst with chloride; and in step

(b) redispersing the metallic platinum and iridium from step (a) by contact with an atmosphere comprising hydrogen chloride and elemental oxygen in an oxygen/hydrogen chloride volume ratio of about 4:1 to 20:1, at a temperature in the range of about 500 to 540°C for a sufficient time to effect about a 75 to 100 percent redispersion of both metallic platinum and iridium. In this step (b) hydrogen chloride is a source of elemental chlorine.

The novel process of the present invention includes a halide pretreatment step, prior to a redispersion step, which enhances the potential of the process for mono-cycle reactivation/redispersion and eliminates the need as practised in the prior art, for rigorous, extended multi-cycle hydrogen/halogen treatment to achieve high redispersion values.

It has been observed that treating a catalyst, which is low in halide content with halogen in a redispersion step without the halide pretreatment, results in the generation of water and oxygen. The generated oxygen moves through the catalyst bed ahead of the halogen "wave". Minimal or only partial redispersion is obtained.

However, halide pretreatment prior to halogen redispersion, results in an increase in catalyst halide without the generation of oxygen even though water is being produced. A subsequent halogen treatment of the catalyst, for example, results in excellent redispersion.

Furthermore, exposing the halide pretreated catalyst to oxygen during the halogen redispersion step also leads to excellent redispersion.

It appears that successful redispersion in the process can be achieved by the elimination of oxygen exposure of the reduced catalyst when the catalyst halide level is low. Thus, processes which provide the means of upgrading the catalyst halide level, without the release of oxygen before the halogen redispersion step or bring about the elimination of oxygen during the halogen redispersion step, will result in successful redispersion.

Catalysts which can be treated by the present process include generally, iridium-containing catalysts, with and without co-catalysts, preferably being supported. Other metallic co-catalysts, which can be present with iridium, which are applicable in the process include metals such, for example, as platinum, rhodium, rhenium, palladium mixtures thereof and the like. The metals can be present in bimetallic, trimetallic combinations and higher combinations, as alloys or physical mixtures on the same support particles or where the metals are individually present on separate support particles. Preferred metal combinations in the catalyst for treatment by the present process are platinum-iridium, and platinum-iridium-rhenium. Two or more catalysts in series can be treated by the present process. The catalyst can also contain non-metallic promoters, for example sulphur or selenium or their compounds, to moderate hydrocracking activity in the reforming process.

The metals can be supported on a suitable support, which is conventional, with the proviso that the support is stable during the pretreatment process and does not undergo any deleterious reactions. Representative examples include silica, zeolites, alumina, silica-alumina, zirconia, alumina-zirconia, mixtures thereof, and the like. In general, the active metallic components, if supported, are present in an amount of preferably up to about 10 weight percent of the supported catalysts.

A preferred catalyst which can be reactivated in the process is agglomerated platinum-iridium, preferably supported on alumina.

By the term, "agglomerated catalysts", as used herein, is meant a supported or unsupported catalyst containing metallic iridium singly, or in combination with other metals described herein, in the agglomerated state, sufficient to reduce the catalytic activity of the metal catalyst. The agglomerated metal, e.g., metallic iridium, can be present due to the result of oxygen burn-off of coke deposits producing agglomerated iridium oxide which then must be reduced to metallic iridium by hydrogen gas. Also, hydrogen stripping at high temperature, preferably about 450 to 600°C, will result in partial removal of coke deposits and leave the agglomerated iridium in a metallic state. The metallic iridium in the agglomerated catalyst will undergo effective redispersion by the process described herein. Where the catalyst additionally contains iridium oxide, a hydrogen reducing step is necessary to convert the iridium oxide to metallic iridium prior to redispersion.

The agglomerated metallic iridium-containing catalysts operable in the process can be completely or partially decoked as described above by separate oxygen or hydrogen treat steps or not decoked at all, but simply removed from an on-stream process, e.g., reforming in the presence of hydrogen gas at elevated temperature and subjected to the described process herein.

Agglomerated, coked catalysts are usually industrially decoked by an oxygen burn-off of carbon deposits. Generally, a typical used catalyst from industrial operation may contain up to about 6 weight % of carbon deposits and may be agglomerated after the decoking step up to about a 100% extent as evidenced by X-ray diffraction. Generally, depending on the conditions used in the coke burn, carbon deposits remaining may be present in about 0.05 to 1.0 weight percent of the catalyst, taken as the dry catalyst. In general, the agglomerates may be greater than about 50 Å and up to about 100 Å and greater in crystallite size. Decoking of the catalyst may be conducted under a variety of conditions, but is generally conducted by heating in an atmosphere containing 0.01 to 10 volume % $O_2$ at a temperature of about 400 to 550°C, to remove surface and embedded carbon deposits, and particularly "active" carbon deposits which can react with halogen during the redispersion step to form halogenated species which are not readily removed from the catalyst surface. Generally, about 60—100 weight percent of carbon deposits can be removed in the decoking step. For example, USP 3,904,510 describes a typical procedure employed in decoking.

As an optional first step of the present process, a low temperature partial decoking of the catalyst can be conducted by heating the spent catalyst in an atmosphere containing less than 1.0 volume percent oxygen and preferably less than 0.5 volume percent, at a temperature of below about 430°C preferably in the range of about 375 to 430°C to remove surface and embedded carbon deposits and particularly "active" carbon deposits which can react with halogen during the redispersion step to form halogenated species which are not readily removed from the catalyst surface. Generally, about 0.3 to 0.8 weight percent of carbon deposits are present after the decoking step and metal iridium agglomeration is present in about 50 numerical percent or less. The present process is applicable to a wide range of agglomerated catalysts containing varying amounts of remaining carbon deposits, different degrees of agglomeration, varying particle size ranges and varying impurities.

A second optional step in the present process is wherein said partially or completely decoked agglomerated catalyst is treated with a reducing atmosphere, generally comprising hydrogen gas to reduce primarily metal oxides and oxide layers which may be present on agglomerated metallic iridium particles, formed during decoking, and as a further aid in removing residual active carbon deposits from the decoking step. If no metallic oxides are present, then this reduction step, as described herein, is not mandatory. However, if metallic oxides are present, the reduction step must be conducted in order to achieve high values of redispersion. Other reducing or inert gases may also be present including nitrogen, helium and the like. The reducing step is generally conducted by contacting the catalyst at an elevated temperature generally in the range of about 250 to 600°C, preferably about 300 to 540°C in a reducing atmosphere comprising above about one volume % hydrogen gas or above, for a time to substantially reduce metal oxides present to the free metal as evidenced by the absence of metal oxide lines and the appearance of iridium metal lines in the X-ray diffraction pattern. Larger and smaller volume percentages of hydrogen can also be effectively used.

X-ray diffraction patterns taken on fresh iridium-containing catalysts show no lines corresponding to any metal component, which indicates that the metal components are present in very small particle sizes, less than about 50 Å. X-ray diffraction patterns as taken on the same catalysts used in reforming, from which coke has been burned in numerous cycles of use, generally show distinct metal lines which indicate highly agglomerated metal particles, of about 10 to 100 weight percent agglomeration of crystallites of

4

about 100 Å and greater. Thus, X-ray diffraction is a useful and convenient technique for measuring the extent of agglomeration, reduction and redispersion of the catalyst in the present process.

Preferred conditions in the reducing step are the use of hydrogen as the reducing gas in a reducing atmosphere comprising essentially hydrogen, at a volume concentration of 0.05 to 5 volume percent and a pressure of about 0.1 to 2.0 MPa, and an inert gas carrier such as nitrogen or helium, particularly preferred at a temperature of about 300 to 540°C for a time sufficient to achieve a substantial reduction of the iridium oxide and other metal oxide to the free metals. By the term "substantially reduce" is meant a reduction in the numerical amount of iridium oxides present by about 75—100% and preferably about 90—100%. Generally, time requirements for the reduction will be in the range from about one to several hours depending on the process conditions. Shorter and longer times are also applicable.

Following the reduction step, if performed, the partially or completely decoked-reduced catalyst is thereafter subjected to halide pretreatment with a halide-providing compound. By the term "halide-providing compound" is meant a compound containing ionically or covalently bound halogen which, under the process conditions, can release the halogen in halide form, preferably as hydrogen chloride, to the catalyst surface. Representative examples include haloorgano compounds and preferably hydrogen halides. Haloorgano compounds include chlorocarbons such as carbon tetrachloride, methylene chloride, chloroform, methyl chloride, 1,2-dichloroethane, hexachloroethane, mixtures thereof, and the like. When using haloorgano compounds, hydrogen, in a large excess over the stoichiometric amount, must also be used to convert the haloorgano compound to a hydrogen halide.

The hydrogen halides can be hydrogen fluoride, hydrogen chloride, hydrogen bromide or hydrogen iodide. Preferably hydrogen chloride is the halide-generating compound used in the process. The atmosphere contacting the catalyst in this step can contain other inert gases, e.g., nitrogen and the like, and also including water vapor for more uniform distribution of halide on the catalyst surface prior to the halogenation treatment, and also preferably hydrogen gas or reducing gas in an amount of about 1—2 volume percent, to ensure that the reduced catalyst remains in the reduced state during hydrogen halide pretreatment. It is essential that the atmosphere be substantially elemental oxygen-free during the halide pretreatment. Within this context, the halide feedstream should also preferably be elemental halogen-free since it is believed that elemental halogen reacts with surface hydroxyl groups to generate elemental oxygen. However, if chlorine is an impurity in the pretreating step gaseous mixture, then a small amount of hydrogen gas should be added to ensure the absence of elemental oxygen.

The temperature of the halide pretreatment is generally conducted in the range of about 250 to 600°C and preferably about 300 to 540°C, and the halide providing compound, at the above-identified temperature, is contacted with the catalyst in a gaseous stream until 1.3 weight percent halide or above, is provided to the catalyst, as detected, for example, by X-ray fluorescence. Preferably, the catalyst is pretreated to a range of about 1.4 to 2.5 weight percent halide, or higher, and most preferably up to saturation by halide of the catalyst surface under the process conditions. As described hereinabove, the weight percentage of halide provided to the catalyst is 1.3 weight percent or above, said catalyst taken on a dry and coke-free basis. It is important that the halide content be maintained up to the halogen redispersion treatment. If a "purge" of hydrogen, nitrogen, water, mixtures thereof, or other materials is used subsequent to the halide pretreatment, then such pure or contacting step should not reduce the halide level to below 1.3 weight percent. If this happens, then the halide pretreatment should again be conducted to ensure 1.3 weight percent halide being present. This is particularly true in cases where multicycle treatment may be necessary which the weight percent of halide present on the catalyst must be replenished again to 1.3 weight percent or above, prior to each halogen redispersion treatment.

In the case where the redispersion step is to be carried out with elemental oxygen, the catalyst is contacted with the halide-containing gaseous stream until about 1.6 weight percent or above halide is provided to the catalyst, as detected, for example, by X-ray fluorescence. Preferably, the catalyst is pretreated to a range of about 1.7 to 2.5 weight percent halide, or higher, and most preferably up to saturation by halide of the catalyst surface under the process conditions.

The halide pretreatment is conducted for sufficient time to achieve a halide loading as described above. In practice, a fast flowing stream of preferably hydrogen chloride is contacted with the catalyst up to and slightly beyond breakthrough. By the term "break-through" is meant the first visible detection by an analytical method such as, for example, the color change of an acid-base indicator, e.g., phenolphthalein.

Halide pretreatment is conducted to breakthrough to achieve desired halide loading of the catalyst and also to ensure a uniform distribution of halide over the entire length of the catalyst bed to prevent "halide gradients" which can lead to non-uniform redispersion. In general, water vapor present in the halide feedstream will tend to lower the halide loading slightly below that compared to a dry halide application, by approximately about 0.4 weight percent, but generally results in a more uniform halide distribution. Thus, saturation by dry HCl of a coke-free, dry catalyst will result in up to about a 2.8 weight percent halide loading, whereas saturation with a wet stream of HCl will result in up to about 2.4 weight percent, or even slightly lower, halide loading.

Time required for the halide pretreatment will, of course, be dependent on many factors including flow rate, hydrogen halide gaseous concentrations, amount of catalyst, and can be desirably adjusted, for example, to run for about 1 to 3 hours per catalyst regeneration in general. Concentration of hydrogen

EP 0 093 621 B1

halide can be from 0.05 to about 5 volume percent, or higher, in the feedstream, which can be at a total pressure of about 0.1 to 2 MPa. Higher and lower values of both variables can also be used effectively.

Following the halide pretreatment step, the catalyst is then subjected to a redispersion step by contacting the catalyst with an atmosphere comprising a redispersing gas selected from elemental halogen, elemental oxygen, a mixture of hydrogen halide and elemental oxygen, or mixture thereof. Although it is not mandatory, it is highly preferable to employ an oxygen source, such as water vapor or elemental oxygen to enhance the redispersion step.

In the halogen redispersion step, elemental halogen gases that are applicable are fluorine, chlorine, bromine and iodine, with chlorine being a preferred embodiment.

The halogen redispersion is carried out at a temperature of about 450 to 600°C and preferably about 500 to 540°C. At this temperature, the gaseous halogen atmosphere, industrially, is generally run at a flow rate over the surface of the catalyst of about 1.1 to 4.4 grams halogen or higher/100 grams catalyst/hour, said catalyst taken on the same basis as described in the hydrogen halide pretreatment, to achieve rapid halogen contact with the catalyst surface.

Also, in a further embodiment, the halogen gaseous atmosphere is passed at a reduced mass flow rate, over the surface of the catalyst at a mass flow rate of about 1 gram, or less, halogen per 100 grams catalyst per hour, in the range of about 0.05 to 1.0 gram halogen per 100 grams catalyst per hour and preferably about 0.3 grams halogen per 100 grams catalyst per hour, and particularly preferred about 0.1 gram halogen per 100 grams catalyst per hour, said catalyst taken as dry and coke-free. By carrying out a reduced halogen mass flow rate of the present process, the effluent chlorine gas is generally decreased about ten-fold, and preferably about one hundred-fold or more, resulting in a significant decrease in corrosion of downstream equipment and a decrease in halogen scrubbing equipment.

In a preferred embodiment, following the halide pretreatment step, the catalyst can alternatively be subjected to a hydrogen halide/oxygen redispersion step by contacting the catalyst with a mixture of hydrogen halide and oxygen. Hydrogen halide gases applicable are hydrogen fluoride, hydrogen chloride, hydrogen bromide and hydrogen iodide with hydrogen chloride being a preferred embodiment. The redispersion step is generally carried out at the same temperature used for the halogen redispersion step being of about 450 to 600°C and preferably about 500 to 540°C.

The hydrogen halide/oxygen atmosphere in the redispersion generally contains oxygen/hydrogen halide in a volume ratio of about 1:5 to 100:1, preferably about 2:1 to 60:1, and most preferably about 4:1 to 20:1. The elemental oxygen also acts to remove residual carbon deposits from the decoking step. However, the presence of oxygen is necessary in the metal redispersion process.

The concentration of hydrogen halide in the feedstream can be from about 0.05 to 5 volume percent, or higher, which can be at a total pressure of about 0.1 to 2.0 MPa. Higher and Lower values of both variables can also be used effectively.

In a further embodiment, following the halide pretreatment step, the partially or completely decoked and reduced catalyst can alternatively be subjected to the redispersion process by contacting the catalyst with a gaseous stream consisting essentially of elemental oxygen. This redispersion step is carried out at the same temperature as for halogen redispersion of about 450 to 600°C and preferably about 500 to 540°C. At this temperature, the oxygen atmosphere is usually run at a slow flow rate over the surface of the catalyst at about a space velocity of up to about 11 v/v/hr., which will not reduce the catalyst halide level below about 1.6 weight percent of said catalyst. A preferred space velocity is in the range of about 2 to 8 v/v/hr. and, particularly preferred about 2 to 6 v/v/hr.

The oxygen redispersion can also be accomplished under static conditions wherein the oxygen gas is contacted with the catalyst in a closed catalyst container. Oxygen redispersion under static conditions, i.e. in a closed container, can be conducted by pressure-depressure cycles. After the halide pretreatment, the reactor is pressurized with diluted oxygen up to about 3.0 MPa and preferably about 1 to 2 MPa in the closed container. The pressure is then slowly decreased in about one-half hour, or longer, down to about one atmosphere and then pressurised back to 1 to 2 MPa. This cycle may be repeated several times.

The oxygen atmosphere may also contain inert gases as carrier gases but preferably is dry with no substantial amount of water vapor being present.

The concentration of elemental oxygen in the gaseous redispersion feedstream is from 0.05 to 100 volume percent, preferably 0.2 to 50 volume percent and most preferred being 4 to 21 volume percent. A particularly preferred gaseous stream for use in the redispersion is air.

In the embodiment employing a low temperature decoking step, following the halide pretreatment step, the partially decoked, reduced catalyst is then subjected to a halogen redispersion step by contacting the catalyst with a stream comprising a mixture of elemental halogen gas and water at elevated temperature. Elemental halogen gases applicable are fluorine, chlorine, bromine and iodine, with chlorine being a preferred embodiment.

The halogen/water redispersion step is generally carried out at a temperature of about 480 to 600°C and preferably about 500 to 540°C.

The elemental halogen and water are present in the redispersion feedstream in a halogen/water volume ratio of about 0.2 to 5 and preferably 0.5 to 2 at elevated temperature, the water vapor is generally present mainly as steam. The halogen/water atmosphere may also contain inert gases such as nitrogen or helium as carrier gases.

6

In another embodiment, it has been found that iridium-containing catalysts, in series, can be efficiently and effectively redispersed and reactivated by the use of a reduction step followed by a halide pretreatment prior to an elemental halogen redispersion step. The redispersion step is conducted with a mixture of elemental halogen and water vapor, as described hereinabove, in order to complete the decoking of the catalyst surface. The effluent chlorine/water is then delivered to a second spent catalyst, in series, to initiate a second redispersion cycle.

The effluent halogen/water stream at elevated temperature from the first catalyst reactor is directed into a subsequent reactor chamber containing a second catalyst, in series, as described herein. A sufficient amount of chlorine/water effluent is contacted with the second catalyst to provide about 1.3 weight percent or higher chloride to the catalyst prior to the coke burn. This acts as an aid in inhibiting metal agglomeration during the oxygen-atmosphere coke-burn, and functions as a means of reducing the amount of hydrogen chloride needed in the pretreatment step. It also serves as a means for partially decoking the catalyst surface prior to the coke burn. The temperature of the second catalyst during contacting with the halogen/water treatment is about 480 to 540°C.

The gaseous redispersing atmosphere may also contain inert gases such as nitrogen or helium as carrier gases carbon dioxide from combustion processes. Water vapor as an oxygen source and for corrosion inhibition can also be present and if present is in an amount of about 0.05 to 2 volume percent.

As described above the gaseous halogen redispersion atmosphere can also contain elemental oxygen as a redispersion aid and if present, is present in an amount of about 0.05 to 25 volume percent. Preferably, elemental oxygen is present in a concentration of about 0.2 to 21 volume percent. Preferred is wherein elemental halogen and elemental oxygen are present in a volume ratio of about 0.05 to 10, respectively, and a particularly preferred range is 0.2 to 5 v/v. The presence of elemental oxygen also serves as an aid in removing small quantities of carbon deposits which may remain after the initial decoking step.

Redispersion is generally conducted until halide or oxygen breakthrough occurs, as evidenced or detected, for example, by a starch-iodide indicator or by an oxygen analyzer. Generally, this requires about 0.5 to 2 hours of treatment for used catalyst, which depends upon flow rate, halogen or oxygen concentration in the feedstream, and amount of catalyst. Generally, however, slightly longer times of halogen treatment are required for substantially complete redispersion as evidenced by the absence of crystalline metal or metal oxide lines in the X-ray diffraction patterns. Preferably a time of about 30 to 90 minutes past breakthrough, i.e., substantially past breakthrough, is necessary for substantially complete redispersion.

Operation past breakthrough of the redispersion gaseous atmosphere is preferred to avoid redispersion gradients along the catalyst bed of redispersed iridium metal. Where gradients are present, usually redispersion levels of iridium metal are high at the front part (entrance) of the reactor but decrease towards the tail (exit) of the reactor.

By carrying out the process described herein substantially complete redispersions of iridium-containing catalysts have been achieved, as described in the following Examples, and particularly those of platinum-iridium on alumina used in hydrocarbon reforming operations. In the latter case, 75 to 100 percent redispersion of both the platinum and iridium agglomerated metals have been achieved in the process. The number of cycles necessary should preferably be one. However, in certain cases such as where minimum halogen treatment past breakthrough times are desired, multi-cycle treatment may prove necessary with concomitant need for additional pretreatment steps, as described hereinabove.

By the term "substantial redispersion" as used herein, is meant redispersion values, as determined by X-ray diffraction, of greater than about 55 numerical percent and preferably about 75 to 100 numerical percent of the iridium on the catalyst surface, also including other metals where present.

Apparatus useful for carrying out the subject process will be conventional in the art and whether operating on a laboratory scale, pilot plant or full commercial plant scale, the apparatus will be obvious to one skilled in the art.

In practice, following successful redispersion of iridium on the catalyst surface, a reduction of halide to about 1.0 weight percent is carried out prior to the actual reforming process since excess halide, at this stage, leads to cracking of the liquid hydrocarbon fraction to undesirably smaller hydrocarbon fragments. This reduction can be accomplished by a wet hydrogen stream, for example, which also serves to convert all of the metal species present after redispersion to the metallic state prior to use in a reforming process.

The following examples are illustrative of the present invention.

Example 1

Into a quartz, tubular, horizontal reactor was charged about 60 grams of a coke-free platinum-iridium on alumina catalyst, wherein 87% of the iridium was agglomerated (BET surface area of 200 $m^2/g$). It contained 0.3 wt.% iridium and 0.3 wt.% platinum, based on the total weight of the catalyst. The catalyst was divided into three approximately equal sections with quartz wool plugs as spacers between the sections. The catalyst in section 1 was at the entry of the reactor and the catalyst in section 3 was at the reactor exit. The chloride level on this catalyst was 0.67 wt.%, as determined by X-ray fluorescence.

The catalyst was treated with a gaseous mixture of 20% hydrogen in helium at one atmosphere for 2 hours at 524°C, whereby substantially all of the iridium oxide was reduced to metallic iridium, as evidenced by the absence of the X-ray diffraction line at 28.05 degrees (2θ) ascribed to $IrO_2$. The hydrogen was purged

7

from the catalyst bed with helium. The catalyst was then treated with a gaseous mixture of 1 volume percent hydrogen chloride and 1.4 volume percent water in helium at a temperature of about 524°C, until the exit HCl gas concentration was equal to that of the inlet. The catalyst was then treated with a gaseous mixture of 1 vol.% chlorine and 1.4 vol.% water in helium carrier gas at 524°C. The purpose for the presence of water was to minimize ferrous metal corrosion in the apparatus. The chlorine and water mixture treatment was discontinued after about 20 minutes when the chlorine concentration in the exit gas reached a steady state concentration.

A dynamic gas chromatograph technique was developed to analyze the gas phase composition at the exit of the reactor as the redispersion process proceeded. It was observed that elemental oxygen was not observed in the exit gas until shortly before the detection of chlorine. By contrast, in a related run where HCl pretreatment was not conducted prior to the chlorine redispersion (as in Example 1A), before chlorine was detected in the exit gas, oxygen appeared shortly after the introduction of chlorine.

The results for Example 1 are listed below in Table I under abbreviated columns for "% Iridium Agglomeration", "% $IrO_2$ Agglomeration", "% Total Agglomeration" and "% Redispersion", respectively, TBHB in the Table is the abbreviation for "Time Beyond Halogen Breakthrough". The symbol "I" represents "initial value" and the terms S-1, S-2 and S-3 represent values obtained after treatment for the catalyst in the first, second and third sections of the catalyst bed. The first section represents the entry section, and the third, the exit region.

The agglomerated catalyst described above was treated substantially the same in a related run except that before the introduction of gaseous chlorine into the catalyst bed to effect redispersion, the catalyst was not contacted with a gaseous mixture of hydrogen chloride and water in helium. In the chlorine redispersion step, the chlorine and water mixture treatment was discontinued after about 55 minutes when the chlorine concentration in the exit gas reached a steady state concentration. The results are given in the Table as Example 1A.

As is seen from comparing the data of Examples 1 and 1A, about 4 times higher metal redispersion was obtained in the reactivation process consisting of hydrogen reduction coupled with hydrogen chloride treatment before chlorine redispersion, as compared with the absence of hydrogen chloride pretreatment.

The agglomerated catalyst described above was treated by substantially the same procedure as described in Example 1, including the reduction step, the HCl pretreatment step, and the elemental halogen redispersion step, except that after the hydrogen reduction and before HCl pretreatment step, a gaseous mixture of 0.5 vol. % oxygen and 1.4 vol. % water was introduced to the catalyst bed for a duration of one hour. During the chlorine redispersion treatment, chlorine flow was continued for 30 minutes past breakthrough (TBHB). The results are given in Table I as Example 1B. As is seen, exposure of the low chloride content (0.67 wt.%) catalyst to oxygen produces the same detrimental effect on catalyst reactivation as oxygen generated in situ indicated in Example 1A.

Utilizing substantially the same procedure of Example 1A, 60 grams of a 100% agglomerated fresh coke-free, platinum-iridium catalyst were subjected to the described reduction step and the halogen redispersion step with the exception that the feedstream in the halogen redispersion step contained 1 vol. % oxygen as well as 1.37 vol. % chlorine. Total halogen treatment time was 120 minutes. Results are given in Table I as Example 1C.

The data illustrate that oxygen present with chlorine in the redispersion step has no beneficial effect on the efficiency of redispersion in the absence of an HCl pretreatment step.

Example 2

The catalyst of Example 1 was given a two-cycle redispersion treatment in which the first cycle was a duplicate of the procedure described in Example 1. The catalyst was left in the reactor while the second cycle was initiated and a second hydrogen reduction was carried out for one hour. After the reduction step, the reactor was purged with a gaseous mixture of 1.4 vol. % water in helium for 15 minutes. However, no HCl pretreatment was conducted prior to chlorine redispersion. Then the reduced catalyst was treated with a gaseous mixture of 1.0 vol. % chlorine and 1.4 vol. % water in helium until the outlet concentration of chlorine attained a steady state concentration. The results are given in Table I.

During the second hydrogen reduction, 0.41 wt.% of chloride was stripped from the catalyst as determined by gas phase analysis. Catalyst chloride level after the second hydrogen reduction could be estimated by subtracting lost chloride, 0.41 wt.%, from the values listed in Table I. However, the chloride concentration of the catalyst in the reactor was above the minimum level of 1.3 wt.% as indicated in the Table which resulted in high overall percent redispersion.

Analysis of the exit gas during the second chlorine treatment showed that oxygen at about 0.35 vol. %, was present in the exit gas, shortly after chlorine introduction. However, the duration of this high level oxygen exposure was relatively short, being about 15 minutes. It is reasonably believed that the high degree of the redispersion obtained after two cycles is the result of the protecting effect of high chloride concentration achieved in the first cycle which eliminates the adverse effect of elemental oxygen generated in situ during the second cycle.

Example 3

The catalyst of Example 1 was treated substantially by the same procedure described in Example 1 except that in both the hydrogen chloride and chlorine treatment steps, the treatment times were extended for a period of about 45 minutes past breakthrough in a single-cycle treatment. The results are given below in Table I.

In a comparison of the data with that from Example 1, it is seen that longer treatment times past halogen breakthrough provide even greater iridium redispersion.

Example 4

An alumina catalyst containing 0.3 wt.% iridium and 0.3 wt.% platinum, based on the total weight of the catalyst (BET surface area of 165 m²/g), had been used in a reformer in the production of $C_5^+$ gasoline. Several weight percent of coke deposit was found on the catalyst after the catalyst had been on stream for several months. The catalyst was regenerated stepwise in the reactor with dilute oxygen at a flame front temperature up to 496°C. The coke-depleted catalyst suffered metal agglomeration and X-ray diffraction measurements taken after hydrogen reduction showed 68% of the total iridium as crystallites greater than 50Å. There was about 0.1 wt.% of carbon left on the catalyst. Sixty grams of this catalyst was charged into the reactor and the reactivation procedure used was substantially the same as the single-cycle process described in Example 3. The results are given in Table I below.

This Example illustrates that the subject process is equally applicable to redispersing commercially spent catalysts with comparable efficiency.

Example 5

The procedure of Example 1 was substantially rerun except that during the halogen redispersion step, elemental oxygen was also present in about 2 vol. % in addition to 1.36 vol. % chlorine. Total halogen treatment time was 25 minutes. Results are given below in Table I.

This Example illustrates that addition of oxygen to the halogen redispersion step which followed the HCL pretreatment results in even greater improvement in the redispersion, as compared to Example 1, in which no oxygen was added during the chlorine treatment.

In a related run, the same procedure described in Example 5 was utilized except that after the HCl pretreatment, a second wet hydrogen treatment was conducted for one hour with a stream containing 20 volume percent hydrogen and 1.4 vol. % water, followed by a wet helium purge prior to the chlorine redispersion. The weight percent chloride in the catalyst was measured by X-ray fluorescence prior to redispersion. The results are indicated below in Table I as Example 5A.

As is seen, where the weight percent chloride on the catalyst surface was only 1.2% following halide pretreatment, only 38% redispersion was obtained following halogen treatment.

9

TABLE I

| Example | TI[a] | % Ir Agglom. | | | % IrO$_2$Agglom. | | | % Total Agglom. | | | % Redis. | | | TBHB |
|---|---|---|---|---|---|---|---|---|---|---|---|---|---|---|
| | | S-1 | S-2 | S-3 | S-1 | S-2 | S-3 | S-1 | S-2 | S-3 | S-1 | S-2 | S-3 | |
| 1[b] | 87 | 37 | 36 | 36 | 0 | 0 | 0 | 37 | 36 | 36 | 58 | 59 | 59 | 10 min. |
| 1A[c] | 87 | 74 | 73 | 67 | 0 | 0 | 9 | 74 | 73 | 76 | 15 | 16 | 13 | 10 min. |
| 1B | 87 | 42 | 48 | 45 | 21 | 23 | 21 | 63 | 71 | 66 | 27 | 18 | 24 | 30 min. |
| 1C | 100 | 59 | 54 | 64 | 5 | 11 | 16 | 64 | 65 | 80 | 36 | 35 | 20 | 78 min. |
| 2[d] | 87 | 9 | 0 | 21 | 0 | 0 | 0 | 9 | 0 | 21 | 90 | 100 | 76 | — |
| 3[e] | 87 | 9 | 11 | — | 0 | 0 | — | 9 | 11 | — | 90 | 87 | — | 45 min. |
| 4[f] | 68 | — | 13 | 17 | — | 0 | 0 | — | 13 | 17 | — | 81 | 75 | 43 min. |
| 5 | 100 | 28 | 16 | 6 | 0 | 0 | 0 | 28 | 16 | 6 | 72 | 84 | 94 | 20 min. |
| 5A[g] | 100 | 62 | 26 | 17 | 0 | 0 | 0 | 62 | 26 | 17 | 38 | 74 | 83 | 23 min. |

[a] Total initial iridium agglomeration.
[b] Weight percent chloride on catalyst: initial, 0.67; S-1, 1.88; S-2, 2.0; S-3, 2.12.
[c] Weight percent chloride on catalyst: initial, 0.67.
[d] Weight percent chloride on catalyst: initial, 0.67; S-1, 1.47, S-2, 1.59; S-3, 1.71 (after second H$_2$ reduction).
[e] Values of Section 3 were not reported due to a lower observed temperature during the run.
[f] Values of Section 1 were not reported due to a lower observed temperature during the run.
[g] Weight percent chloride on catalyst prior to halogen redispersion: initial, 0.67; S-1, 1.20; S-2, 1.45; S-3, 1.52.

Example 6

Into the quartz, tubular, horizontal reactor described in Example 1 was charged about 60 grams of a coke-free, platinum-iridium catalyst in which the iridium was 100% agglomerated. In contained 0.3 weight percent iridium and 0.3 weight percent platinum based on the total weight of the catalyst (BET surface area 200 m²/g). The catalyst was divided into three approximately equal sections with a quartz wool plug as a spacer between the sections. The catalyst in Section 1 was at the entry of the reactor and the catalyst in Section 3 was at the reactor exit. The chloride level on this catalyst was determined to be 0.67 weight percent.

The catalyst was treated with a gaseous mixture of 20 percent hydrogen in helium at one atmosphere for 2 hours at 524°C. At the end of the hydrogen treatment, a gaseous mixture of 1 volume percent hydrogen chloride and 1.4 volume percent water in helium was allowed to contact the catalyst up to a point at which the concentration of hydrogen chloride in the exit gas equaled that in the inlet. At this point, the HCl flow was terminated. Chlorine was then added to the gaseous stream at about 0.9 volume percent at a mass flow rate of about 0.36 grams of chlorine per 100 grams of catalyst per hour. The chlorine and water injections were discontinued at a point in time at which the chlorine concentration in the exit gas reached a steady state concentration. One primary reason of the water addition is to suppress ferrous metal corrosion. The results are given in Table II.

Table II lists results under "% Ir Agglomeration", "% Redispersion" and "Cl₂ Mass Flow Rate". The symbol "I" represents the total initial value of iridium agglomeration, and the terms S-1, S-2, and S-3 represent values obtained after treatment for the catalyst in the first, second and third sections of the catalyst bed. The first section represents the entry section and the third, the exit section.

In a related run, the catalyst was treated exactly as Example 6 except that the mass flow rate of chlorine was 1.45 grams per 100 grams of catalyst per hour. The results are given in Table II as Example 6A.

As is seen by comparing Examples 6 and 6A, lowering the mass flow rate of chlorine from 1.45 to 0.36 increases the percent of metal redispersion, even though the amount of chlorine used in Example 6 was less than that used in the corresponding Example 6A. Chlorine concentration at the exit gas was reduced from 7440 ppm to 6540 ppm (parts per million). Furthermore, exposure of downstream equipment to chlorine was minimized in Example 6 since the amount of chlorine treatment beyond Cl₂ detection had been reduced to 0.18 grams per 100 grams of catalyst. Further reduction in chlorine concentration at the reactor outlet can be achieved at even lower mass flow rate of chlorine by reducing the inlet concentration of chlorine, as is illustrated by Example 7.

Example 7

A run was made wherein the reactor described in Example 6, was charged with about 60 grams of the agglomerated coke-free platinum-iridium catalyst described in Example 6.

The catalyst was treated with a gaseous mixture of 20 percent hydrogen in helium at one atmosphere for 2 hours at 524°C. At the end of hydrogen treatment, a gaseous mixture of 0.52 volume percent hydrogen chloride and 0.72 volume percent water in helium was allowed to contact the catalyst up to a point at which the concentration of hydrogen chloride in the exit gas equaled that in the inlet. After stopping the hydrogen chloride flow, chlorine was added to the helium stream at about 0.25 volume percent, at a mass flow rate of 0.073 grams per 100 grams of catalyst per hour. The gas mixture also contained 4.8 volume percent oxygen and 0.50 volume percent water. This treatment was continued for 3 hours. The results are given in Table II.

In a releated run, the procedure of Example 7 was employed except that during the HCl treatment, the HCl concentration was 1.13 volume percent and H₂O was 1.4 volume percent. Also in the redispersion step, the oxygen concentration was 2.1 volume percent and Cl₂ was 1.36 volume percent. A chlorine mass flow rate of 1.98 grams per 100 grams catalyst per hour was employed and the results are listed in Table II as Example 7A.

As is seen from comparing Examples 7 and 7A, complete metal redispersion was obtained at less than one-half the amount of chlorine used in Example 7A. It appears that by lowering the chlorine mass flow rate, a closer balance between the redispersion rate and utilization of chlorine is realized.

Example 8

A run was conducted in a vertical reactor consisting of 1 1/2 inch (3.81 cm) diameter and 42 inch (106.7 cm) long stainless steel pipe. Into this reactor was charged about 640 grams of the agglomerated coke-free platinum-iridium catalyst described in Example 6.

The catalyst was treated with hydrogen at 65 psig (448.2 kPa gauge) for 2 hours at 521°C. At the end of hydrogen treatment, a gaseous mixture containing 2000 ppm hydrogen chloride in nitrogen was allowed to contact the catalyst up to a point at which the concentration of hydrogen chloride in the exit gas was about 90 percent that of the inlet. After stopping the hydrogen chloride flow, chlorine was added to the nitrogen stream at 500 ppm at a mass flow rate of 0.073 grams per 100 grams of catalyst per hour. The gaseous mixture also contained 1.3 volume percent oxygen. This treatment was continued for about three and a quarter hours. The results are given in Table II below.

Complete metal redispersion was obtained at this low mass flow rate of chlorine. In addition, the low chlorine concentration at the reactor outlet minimized chlorine scrubbing requirement.

11

TABLE II

| Example | % Ir Agglom. | | | | % Redis. | | | Cl$_2$ Mass flow rate |
|---|---|---|---|---|---|---|---|---|
| | I | S-1 | S-2 | S-3 | S-1 | S-2 | S-3 | |
| 6[a] | 100 | 6 | 17 | 30 | 94 | 83 | 70 | 0.36 |
| 6A[b] | 100 | 30 | 42 | 49 | 70 | 58 | 51 | 1.45 |
| 7[c] | 100 | 0 | 0 | 0 | 100 | 100 | 100 | 0.073 |
| 7A[d] | 100 | 28 | 16 | 6 | 72 | 84 | 94 | 1.98 |
| 8[e] | 100 | 0 | 0 | 0 | 100 | 100 | 100 | 0.073 |

[a] Amount of Cl$_2$ treatment to detection (g./100 g. cat.): 0.30; Amount of Cl$_2$ treatment beyond detection (g./100 g. cat.): 0.18; Concentration of Cl$_2$ [gas at exit (ppm)]: 6540.

[b] Amount of Cl$_2$ treatment to detection (g./100 g. cat.): 0.29; Amount of Cl$_2$ treatment beyond detection (g./100 g. cat.): 0.24; Concentration of Cl$_2$ [gas at exit (ppm)]: 7440.

[c] Amount of Cl$_2$ treatment to detection (g./100 g. cat.): 0.068; Amount of Cl$_2$ treatment beyond detection (g./100 g. cat.): 0.15; Concentration of Cl$_2$ [gas at exit (ppm)]: 900.

[d] Amount of Cl$_2$ treatment to detection (g./100 g. cat.): 0.17; Amount of Cl$_2$ treatment beyond detection (g./100 g. cat.): 0.66; Concentration of Cl$_2$ [gas at exit (ppm)]: 9000.

[e] Amount of Cl$_2$ treatment to detection (g./100 g. cat.): 0.02; Amount of Cl$_2$ treatment beyond detection (g./100 g. cat.): 0.22; Concentration of Cl$_2$ [gas at exit (ppm)]: 300.

Example 9

Into the quartz tubular, horizontal reactor described in Example 1, was charged about 60 grams of a coke-free platinum-iridium on alumina catalyst, wherein 100% of the iridium was agglomerated. It contained 0.3 weight percent iridium and 0.3 weight percent platinum, based on the total weight of the catalyst (BET surface area of 200 m$^2$/g. The catalyst was divided into three approximately equal sections with quartz wool plugs as spacers between the sections. The catalyst in Section 1 (S-1 in the Table) was at the entry of the reactor and the catalyst in Section 3 (S-3 in the Table) was at the reactor exit. The chloride level on this catalyst was 0.67 weight percent, as determined by X-ray fluorescence.

The catalyst was treated with a gaseous mixture of 20 percent hydrogen and 1.4 percent water in helium at one atmosphere for 2 hours at 524°C, whereby substantially all of the iridium oxide was reduced to metallic iridium, as evidenced by the absence of the X-ray diffraction line at 28.05 degrees (2θ) ascribed to IrO$_2$. The hydrogen was purged from the catalyst bed with helium. The catalyst was then treated with a gaseous mixture of 1.1 volume percent hydrogen chloride and 1.4 volume percent water in helium at 500 cc/min. After about 83 minutes, hydrogen chloride was detected at the reactor outlet. Hydrogen chloride treatment was continued until concentration of hydrogen chloride at the reactor outlet was about 90 percent of that at the reactor inlet. This required about 15 minutes. At this point, 2.4 volume percent of oxygen was added to the gaseous mixture and the HCl/O$_2$ treatment continued for 200 minutes. The catalyst was then rereduced with 20 volume percent hydrogen and 1.4 volume percent water in helium for 75 minutes. The results are shown below in Table III.

The results for Example 9 are listed below in Table III under abbreviated columns for "% Iridium Agglomeration", "% IrO$_2$ Agglomeration", "% Total Agglomeration" and "% Redispersion", respectively, TBHB in Table III is the abbreviation for "Time Beyond Halogen Breakthrough". The symbol "I" represents "initial value" and the terms S-1, S-2 and S-3 represent values obtained after treatment for the catalyst in the first, second and third sections of the catalyst bed. The first section represents the entry section, and the third, the exit region.

In a related run, the catalyst described above was treated substantially the same as Example 9 except that no oxygen was added to the HCl stream after its concentration reached 90% at the outlet. The results are shown below in Table III as Example 9A.

As is seen from contrasting Examples 9 and 9A, near complete iridium redispersion was obtained when the present invention was practised whereas treating the agglomerated catalyst with HCl in the absence of oxygen resulted in essentially no metal redispersion.

Example 10

The catalyst of Example 9 was treated substantially the same as in Example 9 except that in the HCl+O$_2$ treatment, the gas flow rate was lowered from 500 to 110 cc/min and this treatment was continued for 329 minutes. The results are shown in Table III.

In a related run, the catalyst of Example 9 was treated in a similar manner as in Example 10 except that

12

there was no hydrogen chloride pretreatment before the $HCl/O_2$ redispersion. During the $HClO_2$ treatment, the oxygen level was 2.8 volume percent and no water was added to the $HCl/O_2$ gaseous feedstream. The $HCl+O_2$ treatment was continued for 280 minutes. The results are shown in Table III as Example 10A.

As is seen from contrasting Examples 10 and 10A, omission of the hydrogen chloride treat before the $HCl+O_2$ treatment greatly reduced the extent of metal redispersion and, in particular, it resulted in the formation of iridium oxide agglomerates. The HCl pretreatment raised the catalyst chloride level from 0.67 to 1.8 weight percent.

Example 11

The catalyst of Example 9 was treated in a similar manner as in Example 10 except that the treatment gases contained no water and in the $HCl+O_2$, treatment the concentration of oxygen was 27 volume percent. This treatment was continued for 45 minutes. At the end of this treatment, the inlet and outlet of the reactor were blocked off and the catalyst was soaked in the gas mixture for 3 hours. The results are shown in Table III.

Example 11 indicates that high oxygen concentration in the $HCl+O_2$ treat step was equally effective in metal redispersion. Furthermore, soaking the catalyst in the gaseous mixture appears to improve the redispersion of the catalyst situated near the reactor entrance.

Example 12

An alumina catalyst containing 0.3 weight percent iridium and 0.3 weight percent platinum, based on the total weight of the catalyst, had been used in a commercial reformer in the production of $C_5{}^+$ gasoline. Several weight percent of coke deposit was found on the catalyst. The catalyst was regenerated in the reactor with dilute oxygen up to a flame front temperature of 480°C, resulting in an iridium agglomeration of 47 percent and the carbon content of the regenerated catalyst was 0.18 weight percent. Sixty grams of this catalyst were charged into the reactor and the reactivation procedure used was substantially the same as Example 9 except that in the $HCl+O_2$ treatment the concentration of HCl and oxygen were 1.2 and 20.6 volume percent, respectively. The results are shown in Table III.

Another portion of the same catalyst was regenerated in the reactor with dilute oxygen at a flame front temperature of 400°C. The carbon content of the regenerated catalyst was 0.62 weight percent. Sixty grams of this catalyst were charged into the reactor and the reactivation procedure used was exactly as in Example 12 except that the $HCl+O_2$ treatment was 153 minutes. The results are shown in Table III as Example 12A.

Examples 12 and 12A show that the present invention works well with coked catalyst. High degrees of metal redispersion were obtained when the present invention was practiced with coked catalyst, wherein the coke was removed by oxygen in the gas phase during redispersion under the high reaction temperature.

Example 13

The catalyst of Example 12 was further decoked at 538°C in air for 16 hours. After this treatment, the carbon content of the catalyst decreased to 0.1 weight percent. The coke-depleted catalyst suffered further metal agglomeration and X-ray diffraction showed essentially all the iridium was agglomerated. Sixty grams of this catalyst were charged into the reactor and were treated in a similar manner as in Example 12, except that no water was present in the treat gases and in the $HCl+O_2$ treatment, oxygen concentration was increased from 2 to 25 volume percent in four steps, which were: 2 volume percent for 15 minutes, 5.3 volume percent for 15 minutes, 13.0 volume percent for 19 minutes and 25 volume percent for 60 minutes. The results are shown in Table III.

As is seen from contrasting Examples 9 and 13, a higher degree of metal dispersion was obtained when no water was added to the treating gas and the oxygen concentration was increased in several steps. This stepwise increase in oxygen concentration is very advantageous when the present invention is used to redisperse catalysts containing substantial amounts of coke deposit. The limited oxygen concentration in the initial coke burn removes most of the coke and, at the same time, avoids uncontrolled temperature exotherms.

TABLE III[a]

| Example | | % Ir Agglom. | | | % IrO$_2$ Agglom. | | | % Total Agglom. | | | % Redis. | | |
|---|---|---|---|---|---|---|---|---|---|---|---|---|---|
| | TI[b] | S-1 | S-2 | S-3 | S-1 | S-2 | S-3 | S-1 | S-2 | S-3 | S-1 | S-2 | S-3 |
| 9 | 100 | 28 | 14 | 0 | 0 | 0 | 0 | 28 | 14 | 0 | 72 | 86 | 100 |
| 9A | 100 | 95 | 92 | 101 | 0 | 0 | 0 | 95 | 92 | 101 | 5 | 8 | 0 |
| 10 | 100 | 5 | 0 | 0 | 0 | 0 | 0 | 5 | 0 | 0 | 95 | 100 | 100 |
| 10A | 100 | 32 | 38 | 62 | 7 | 10 | 15 | 39 | 48 | 77 | 61 | 52 | 23 |
| 11 | 100 | 0 | 0 | 0 | 0 | 0 | 0 | 0 | 0 | 0 | 100 | 100 | 100 |
| 12[c] | 47 | 11 | 15 | 9 | 0 | 0 | 0 | 11 | 15 | 9 | 76 | 68 | 81 |
| 12A[d] | 49 | 17 | 9 | 0 | 0 | 0 | 0 | 17 | 9 | 0 | 65 | 82 | 100 |
| 13 | 100 | 9 | 0 | 0 | 0 | 0 | 0 | 9 | 0 | 0 | 91 | 100 | 100 |

[a] S-1, S-2, S-3 are the entrance, middle and exit sections, respectively, after redispersion treatment.
[b] Total initial iridium agglomeration.
[c] % Carbon on catalyst: initial, 0.18; S-1, 0.06; S-2, 0.07; S-3, 0.07.
[d] % Carbon on catalyst: initial, 0.62; S-1, 0.08; S-2, 0.08; S-3, 0.08.

Example 14

A catalyst containing 0.3 weight percent iridium and 0.3 weight percent platinum, based on the total weight of the catalyst (BET surface area of 158 m²/g) had been used in a reformer in the production of $C_5^+$ gasoline. Several weight percent of coke deposit was found on the catalyst after the catalyst had been on stream for several months. The catalyst was regenerated stepwise in the reactor with dilute oxygen up to a flame front temperature of 496°C. The coke depleted catalyst suffered metal agglomeration and X-ray diffraction showed 80 percent of the total iridium as crystallites greater than 50 Å. There was about 0.11 weight percent of carbon left on the catalyst.

Sixty grams of this catalyst was charged into a quartz, tubular, horizontal reactor. The catalyst was divided into three approximately equal sections with a quartz wool plug as a spacer between the sections. The catalyst in Section 1 was at the entry of the reactor and the catalyst in Section 3 was at the reactor exit. The chloride level on this catalyst was determined to be 0.78 weight percent by X-ray fluorescence.

The catalyst was treated with a gaseous mixture of 20 percent hydrogen and 1.4 volume percent water in helium at one atmosphere for 2 hours at 524°C. The hydrogen was purged from the catalyst bed with helium. The catalyst was then treated with a gas mixture of 1.13 volume percent hydrogen chloride and 1.4 volume percent water in helium at 500 cc/min. After about 59 minutes, hydrogen chloride was detected at the reactor outlet. Hydrogen chloride treatment was continued for another 34 minutes. At this point, the hydrogen chloride concentration in the exit gas approached to that of hydrogen chloride in the inlet gas. Air at 4 cc/min. was introduced into the reactor and the flowstreams of hydrogen chloride, helium and water vapor were discontinued. The air treatment was continued for 3 1/4 hours. The results are shown in Table IV.

In a related run, Example 14 was repeated substantially as described except that during the air treatment, the flow rate of air was increased to 100 cc/min. from 4 cc/min. The air treatment was continued for 5—1/2 hours. The results are given in Table IV as Example 14A. Chlorine was observed at the reactor outlet during the air treatment even through no chlorine was supplied to the reactor in both Examples 14 and 14A.

In Example 14A, the concentration of chlorine was 0.15 volume percent after it was air treated 16 minutes. Chlorine concentration decreased to 0.02 volume percent in 1 1/2 hours. By contrast, chlorine concentration in Example 14 increased from 0.15 volume percent to 0.41 volume percent at the end of the air treatment. High air flow rate in Example 14A continuously removed chlorine from the reactor, and in turn, lowered the chloride level of the catalyst, whereas the low air flow rate in Example 14 minimized the purging of the reactive gases and conserved the catalyst chloride level. The catalyst chloride levels in Example 14A were lower than those of Example 14 by more than 0.2 weight percent.

In a further related run, Example 14 was repeated substantially as described except that the HCl treatment was discontinued after 30 minutes of treatment and before HCl was detected at the reactor outlet. The air treatment was continued for 7 hours. The results are shown in Table IV as Example 14B.

This example indicates that the chloride level on the catalyst before the low flow oxygen treatment step is critical. The chloride levels after oxygen treatment do reflect the chloride levels of the catalyst at the end of the HCl treatment since during the low flow oxygen treatment, no significant loss of chlorine from the catalyst was detected at the reactor outlet.

As is indicated in the data, moderate metal redispersion was obtained when the catalyst chloride level was 1.2 weight percent and essentially no overall metal redispersion was realised when the catalyst chloride level was below 1 weight percent.

Example 15

Example 14 was repeated substantially as described except that no water vapor was added in the hydrogen reduction step and the hydrogen chloride treat step. In the oxygen treat step, 10 percent oxygen in helium was used instead of air. The oxygen treatment was continued for 6.7 hours. The results are shown in Table IV.

As is seen from comparing Example 15 with Example 14, complete metal redispersion was obtained when water was omitted in the treating gases and correspondingly, this resulted in an increase in catalyst chloride content of the treated catalyst.

Example 16

The catalyst of Example 14 was treated substantially the same as in Example 15, except that during the oxygen treatment, 8 cc/min. gas flow rate was employed and the oxygen treatment time was about 2.3 hours. The results are shown in Table IV.

It appears that though the oxygen flow rate was double, it still was sufficiently low that no significant loss of catalyst chloride occurred during the oxygen treatment and therefore excellent metal redispersion was realized.

Example 17

A run was made using a fresh coke-free alumina catalyst containing 0.3 weight percent platinum and 0.3 weight percent iridium, based on the total weight of the catalyst (BET surface area of 200 m²/g). The iridium component in this freshly prepared catalyst was completely agglomerated to large iridium particles

15

by air calcined at 540°C for 16 hours. Sixty grams of this catalyst were loaded into a reactor as described in Example 14. The catalyst was treated substantially the same as in Example 14 except that the air treatment was continued for 1.25 hours. The results are shown in Table IV.

As is seen from the data, the present invention is highly effective in redispersing metal agglomerates present on fresh, coke-free and used catalysts from a reformer. However, the chloride level of the fresh, coke-free catalyst is higher than the latter by about 0.4 weight percent after the redispersion treatment. The lower chloride level on the used catalyst is mainly due to a reduction in the alumina surface area as a result of numerous cycles of on oil and coke burn regeneration.

Example 18

The catalyst of Example 17 was treated substantially as in Example 17, except that after the HCl treatment, a ten-minute dry helium purge was employed before the slow flow air treatment. The air treat step was continued for 4 hours. The results are shown in Table IV.

This example indicates that even a short purging between the hydrogen chloride and the slow air flow treatment steps leads to a loss of catalyst chloride and a reduction in metal redispersion.

Example 19

The catalyst of Example 17 was treated substantially the same as in Example 17 except that 2.6 volume percent water was employed in the hydrogen and hydrogen chloride treatment steps. The gaseous flow rate in the hydrogen chloride treatment was 660 cc/min. containing HCl in about 0.3 volume percent. The slow flow air treatment was continued about 2 hours. The results are shown in Table IV below.

TABLE IV

| Example | TI[a] | % Ir Agglom. | | | % IrO$_2$ Agglom. | | | % Total Agglom. | | | % Redis. | | |
|---|---|---|---|---|---|---|---|---|---|---|---|---|---|
| | | S-1 | S-2 | S-3 | S-1 | S-2 | S-3 | S-1 | S-2 | S-3 | S-1 | S-2 | S-3 |
| 14[b] | 80 | 8 | 8 | 0 | 0 | 0 | 0 | 8 | 8 | 0 | 90 | 90 | 100 |
| 14A[c] | 80 | 44 | 37 | 28 | 34 | 35 | 30 | 78 | 72 | 58 | 3 | 10 | 28 |
| 14B[c] | 80 | 17 | 18 | 46 | 5 | 26 | 41 | 22 | 44 | 87 | 73 | 45 | −9[n] |
| 15[e] | 80 | 0 | 0 | 0 | 0 | 0 | 0 | 0 | 0 | 0 | 100 | 100 | 100 |
| 16[f] | 80 | 0 | 0 | 7 | 0 | 0 | 0 | 0 | 0 | 7 | 100 | 100 | 91 |
| 17[g] | 100 | 0 | 0 | <5 | 0 | 0 | 0 | 0 | 0 | <5 | 100 | 100 | >95 |
| 18[h] | 100 | 14 | 11 | 0 | 12 | 9 | 0 | 26 | 20 | 0 | 74 | 80 | 100 |
| 19[i] | 100 | 13 | 14 | 22 | 57 | 69 | 49 | 70 | 83 | 71 | 30 | 27 | 29 |
| 20[j] | 100 | 0 | 0 | 5 | 0 | 0 | 0 | 0 | 0 | 5 | 100 | 100 | 95 |
| 21[k] | 100 | 0 | 0 | 0 | 0 | 0 | 0 | 0 | 0 | 0 | 100 | 100 | 100 |
| 22[l] | 100 | 75 | 37 | 79 | 0 | 0 | 0 | 71 | 37 | 79 | 25 | 63 | 21 |
| 23[m] | 47 | 16 | 13 | 13 | 0 | 0 | 0 | 16 | 13 | 13 | 66 | 72 | 72 |

[a] Total initial iridium agglomeration.
[b] % Cl: initial, 0.78; S-1, 1.44; S-2, 1.44; S-3, 1.45.
[c] % Cl: initial, 0.78; S-1, 1.16; S-2, 1.20; S-3, 1.23.
[d] % Cl: initial, 0.78; S-1, 1.28; S-2, 1.22; S-3, 0.97.
[e] % Cl: initial, 0.78; S-1, 1.63; S-2, 1.57; S-3, 1.59.
[f] % Cl: initial, 0.78; S-1, 1.73; S-2, 1.69; S-3, 1.70.
[g] % Cl: initial, 0.67; S-1, 1.85; S-2, 1.87; S-3, 1.86.
[h] % Cl: initial, 0.67; S-1, 1.73; S-2, 1.75; S-3, 1.74.
[i] % Cl: initial, 0.67; S-1, 1.51; S-2, 1.46; S-3, 1.44.
[j] % Cl: initial, 0.67; S-1, 1.80; S-2, 1.77; S-3, 1.73.
[k] % Cl: initial, 0.67; S-1, 1.77; S-2, 1.81; S-3, 1.82.
[l] % Cl: initial, 0.67; S-1, 1.53; S-2, 1.60; S-3, 1.57.
[m] % Cl: initial, 0.79; S-1, 1.46; S-2, 1.49; S-3, 1.52.
   % C: initial, 0.18; S-1, 0.09; S-2, 0.10; S-3, 0.07.
[n] Indicates some agglomeration occurred during the redispersion step.

As is seen from contrasting Examples 17 and 19, an increase in $H_2O/HCl$ ratio from 1.24 to 8.67 greatly reduces metal redispersion and lowers the chloride level of the catalyst by about 0.4 weight percent.

Example 20

The catalyst of Example 17 was treated substantially the same manner as in Example 17 except that about 0.3 to 0.4 volume percent water was employed in the hydrogen and the hydrogen chloride treatment steps. The gas flow rate in the hydrogen chloride treat was 773 cc/min. and HCl was present in 0.32 volume percent. The slow flow air treatment was continued for about 3 hours. The results are shown in Table IV.

As is seen from contrasting Examples 19 and 20, by lowering the concentration of water to match that of hydrogen chloride, i.e., maintaining the $H_2O/HCl$ ratio at 1.25, excellent metal redispersion is obtained despite the low concentration of HCl. Additionally, the chloride level of the catalyst increases by about 0.3 weight percent.

Example 21

The catalyst of Example 17 was treated substantially the same as in Example 17 except that in the slow flow air treatment, pure oxygen was used. The oxygen treatment was continued for 2.75 hours. The results are shown in Table IV.

This example indicates oxygen concentration as high as 100 percent can be employed in the slow flow oxygen treatment step.

Example 22

Six hundred and forty grams of the catalyst of Example 17 was charged into a high pressure reactor. The catalyst was treated with a gas mixture containing 0.3 volume percent water and about 50 percent hydrogen in nitrogen at 521°C for about 2 hours. The reactor pressure was 65 psig (448.2 kPa gauge). At the end of the hydrogen treatment, hydrogen concentration was reduced to 1.5 volume percent and 0.2 volume percent of HCl was added. This treatment was continued until the concentration of HCl at reactor outlet was about 90 percent of the inlet HCl concentration. Then hydrogen was shut off 15 minutes before the end of the HCl treatment. This reduced the hydrogen concentration in the reactor close to zero before the introduction of air. The reactor exit was blocked off and it was pressurized with dry air up to 205 psig (1413.5 kPa gauge). The catalyst was allowed to soak in the gas mixture for 3 hours. The results are shown in Table IV.

In this example, the amount of oxygen per gram of catalyst introduced into the reactor was equivalent to that in Example 17. However, much lower metal redispersion was obtained when the air treatment was conducted under static conditions. This may be due to the build-up of water vapor in the reactor. Additionally, the catalyst chloride level in this example is lower than that of Example 17 by 0.3 weight percent.

A possible method to avoid buildup of water vapor is by oxygen pressure-depressure cycles. After the HCl pretreatment, the reactor may be pressurized with diluted oxygen (plus inert carrier) to a desired pressure, e.g. 100 psig (689.5 kPa gauge). Then the pressure is slowly decreased to atmospheric pressure and then repressurized to about 100 psig (about 0.7 MPa gauge). Repeating this cycle several times allows the oxygen to contact the catalyst to effect redispersion without a significant buildup of water vapor.

Example 23

An alumina catalyst containing 0.3 weight percent iridium and 0.3 weight percent platinum, based on the total weight of the catalyst, had been used in a reformer in the production of $C_5^+$ gasoline. Several weight percent of coke deposit was found on the catalyst. The catalyst was regenerated in the reactor with dilute oxygen up to a flame front temperature of 480°C. Carbon content of the regenerated catalyst was 0.18 weight percent. Sixty grams of this catalyst was charged into the reactor and the reactivation procedure used was substantially the same as Example 14 except that the HCl concentration was 1.23 volume percent in the HCl treatment and the slow flow air treatment was 8.2 hours. The results are shown in Table IV.

This Example indicates that the present invention can be applied to carbon-containing catalysts. Metal redispersion as well as coke burn-off can be effected during the oxygen redispersion step.

Example 24

The quartz, tubular horizontal reactor described in Example 1 was charged with about 60 grams of a coke-free platinum-iridium catalyst, wherein the iridium was 100 percent agglomerated, (produced by agglomeration at 540°C). It contained 0.3 weight percent iridium and 0.3 weight percent platinum based on the total weight of the catalyst (BET surface area of 200 $m^2/g$). The catalyst was divided into three approximately equal sections with a quartz wool plug as a spacer between the sections. The catalyst in Section 1 was at the entry of the reactor and the catalyst in Section 3 was at the reactor exit. The chloride level on this catalyst was determined to be 0.67 weight percent.

The catalyst was treated with a gas mixture of 20 percent hydrogen in helium at one atmosphere for 2 hours at 524°C. At the end of hydrogen treatment, a gaseous mixture of 1 volume percent hydrogen chloride and 1.4 volume percent water in helium was allowed to contact the catalyst up to a point at which the concentration of hydrogen chloride in the exit gas was 90 percent that in the inlet. At this point, chlorine was added to the gas stream at about 1 volume percent and at a mass flow rate of 0.36 gram per 100 gram of catalyst per hour, and water concentration was lowered to 1.1 volume percent. Chlorine was detected at the reactor exit at a chlorine treat equaled to 0.31 gram of chlorine per 100 gram of catalyst. Chlorine injection was extended beyond the point of detection until 0.49 grams of chlorine per 100 grams of catalyst had been introduced into the reactor. The results are given in Table V.

Example 25

An alumina catalyst containing 0.3 weight percent iridium and 0.3 weight percent platinum based on the total weight of the catalyst (BET surface area of 170 $m^2/g$) had been used in a commercial reformer in the production of $C_5^+$ gasoline. Several weight percent of coke deposit was found on the catalyst. The catalyst was regenerated in the reactor with dilute oxygen at a low flame front temperature of 400°C. The metal agglomeration was below 50%. Carbon content of the regenerated catalyst was 0.62 weight percent. Sixty grams of this catalyst was charged into the reactor and the reactivation procedure used was substantially the same as in Example 24 except that in the chlorine treatment, no chlorine was detected up to a chlorine treatment of 3.24 gram per 100 gram of catalyst. The results are shown in Table V.

This example indicates that coke deposit is quantitatively removed in the absence of added oxygen. Complete metal redispersion was obtained when coke deposit was reduced to below 0.1 weight percent. It appears that in the presence of water, chlorine oxidizes carbon to carbon oxides.

Example 26

The catalyst of Example 24 was treated in a similar manner as Example 1 except that no water was present in the treat gases and the mass flow rate of the chlorine treat was 2 grams per 100 grams of catalyst per hour. The results are shown in Table V below.

As is seen from the data, coke deposits were not quantitatively removed by the dry chlorine treat since the carbon contents in the three sections were quite uniform. For this particular catalyst, about 0.3 weight percent of coke deposit was the maximum amount that could be removed by dry chlorine treat since more than 2.5 times longer chlorine exposure of catalyst in Section 1, as compared to that in Section 3, did not significantly increase the carbon removal of the former.

TABLE V

| Example | % Ir Agglom. | | | | % Redis. | | | %Cl | | | | %C | | | |
|---|---|---|---|---|---|---|---|---|---|---|---|---|---|---|---|
| | TI[a] | S-1 | S-2 | S-3 | S-1 | S-2 | S-3 | I | S-1 | S-2 | S-3 | I | S-1 | S-2 | S-3 |
| 24[b] | 100 | 6 | 17 | 30 | 94 | 83 | 70 | 0.67 | 1.90 | 1.90 | 2.02 | — | — | — | — |
| 25[c] | 49 | 0 | 19 | 46 | 100 | 61 | 6 | 0.78 | 1.70 | 2.10 | 2.40 | 0.62 | 0.09 | 0.12 | 0.46 |
| 26[d] | 49 | 6 | 7 | 35 | 88 | 86 | 31 | 0.78 | 3.3 | 3.3 | 3.3 | 0.62 | 0.31 | 0.32 | 0.36 |

[a] Total initial iridium agglomeration.
[b] Mass flow rate of $Cl_2$ (g/100 g cat./hr.): 0.36; Amount of $Cl_2$ used until $Cl_2$ detection (g/100 g cat.): 0.31; Amount of $Cl_2$ at the end of the redispersion (g/100 g cat.): 0.49.
[c] Mass flow rate of $Cl_2$ (g/100 g cat./hr.): 0.36; Amount of $Cl_2$ at the end of redispersion (g/100 g. cat.): 3.24; no chlorine was detected at reactor exit at end of run.
[d] Mass flow rate of $Cl_2$ (g/100 g cat./hr.): 2.0; Amount of $Cl_2$ used until $Cl_2$ detection (g/100 g cat.): 3.1; Amount of $Cl_2$ at the end of the redispersion (g/100 g cat.): 5.1.

EP 0 093 621 B1

Example 27

A quartz, tubular, horizontal reactor was charged with about 60 grams of an agglomerated, coke-free platinum-iridium catalyst wherein 100 percent of the iridium was agglomerated. It contained 0.3 weight percent iridium and 0.3 weight percent platinum based on the total weight of the catalyst. The catalyst was divided into three approximately equal sections with a quartz wool plug as a spacer between the sections. The catalyst in Section 1 was at the entry of the reactor and the catalyst in Section 3 was at the reactor exit. The chloride level on this catalyst was determined to be 0.67 weight percent.

The catalyst was treated with a gas mixture of 20 percent hydrogen in helium at one atmosphere for 2 hours at 524°C. At the end of hydrogen treat, a gaseous mixture of 1 volume percent hydrogen chloride and 1.4 volume percent water in helium was allowed to contact the catalyst up to a point at which the concentration of hydrogen chloride in the exit gas equaled that in the inlet. At this point, chlorine was added to the gas stream at 0.83 volume percent and at a mass flow rate of 0.29 grams per 100 grams of catalyst per hour. Chlorine was detected at the reactor exit at a chlorine treat equaled to 0.27 grams chlorine per 100 grams of catalyst. Chlorine injection was extended beyond the point of detection until 0.74 grams chlorine per 100 grams of catalyst had been introduced into the reactor. The results are given in Table VI.

Excellent metal redispersion is obtained when the chlorine treat is continued beyond the point of chlorine detection. The amount of chlorine injected beyond the point of detection was 0.47 grams per 100 grams of catalyst. The downstream equipment would be contacted with this amount of chlorine if there was no provision for its removal.

Example 28

The catalyst described in Example 27 was mixed with carbon black powder to give a carbon content of 0.37 weight percent based on anhydrous catalyst. The catalyst was treated exactly as in Example 27 except that the mass flow rate of chlorine was 0.36 grams per 100 grams of catalyst per hour. No chlorine was detected at the reactor exit after the catalyst had been in contact with 2.35 grams halogen per 100 grams of catalyst. The results are given in Table VI below.

The data indicated that when the catalyst contained 0.37 weight percent coke deposits, the chlorine front traveled from the catalyst bed entrance to about 40 percent of the total bed length at a chlorine treat equal to 2.35 grams chlorine per 100 grams catalyst. Coke deposits on this portion of the catalyst were nearly quantitatively removed. Therefore, if catalyst in Example 28 was downstream of catalyst in Example 27, i.e., the two reactors were in series and the carbon-containing catalyst was at the back reactor, no chlorine would be detected in the exit gas of the back reactor and, in fact, it can easily be calculated that less than 10 percent of the carbon-containing catalyst is needed to react with the 0.47 grams chlorine per 100 grams catalyst emerging from the exit of the front reactor.

Example 29

An alumina catalyst containing 0.3 weight percent iridium and 0.3 weight percent platinum, based on the total weight of the catalyst, was used in a reformer in the production of $C_5^+$ gasoline. Several weight percent of coke deposit was found on the catalyst. The catalyst was regenerated in the reactor with dilute oxygen at a flame front temperature of about 400°C. The resulting iridium agglomeration was 49 percent and the carbon content in the regenerated catalyst was 0.62 weight percent. Sixty grams of this catalyst was charged into the reactor and the reactivation procedure used was substantially the same as in Example 28 except that no water was present in the treating gases and the mass flow rate of the chlorine treatment was 2 grams per 100 grams catalyst per hour. The results are given below in Table VI.

This example indicates that coke deposits were not quantitatively removed by the dry chlorine treatment since the carbon deposits in the three sections were quite uniform. Indeed, for this particular catalyst, about 0.3 weight percent of coke deposits was the maximum amount that could be removed by the dry chlorine treatment since the more than 2.5 times longer chlorine exposure of catalyst in Section (1), as compared to Section (3), did not significantly increase the carbon removal of the former.

TABLE VI

| Example | % Ir Agglom. | | | | % Redis. | | | %Cl | | | | %C | | | |
|---------|-------------|-----|-----|-----|-----|-----|-----|------|-----|-----|-----|------|------|------|------|
|         | TI[a]       | S-1 | S-2 | S-3 | S-1 | S-2 | S-3 | I    | S-1 | S-2 | S-3 | I    | S-1  | S-2  | S-3  |
| 27[b]   | 100         | 0   | 0   | 10  | 100 | 100 | 90  | 0.67 | 1.79| 1.90| 1.90| —    | —    | —    | —    |
| 28[c]   | 100         | 0   | 100 | 100 | 100 | 0   | 0   | 0.67 | 2.0 | 2.7 | 2.6 | 0.37 | 0.05 | 0.36 | 0.37 |
| 29[d]   | 49          | 6   | 7   | 34  | 88  | 86  | 31  | 0.78 | 3.3 | 3.3 | 3.3 | 0.62 | 0.31 | 0.32 | 0.36 |

[a] Total initial iridium agglomeration.

[b] Chlorine mass flow rate (g/100 g cat./hr.): 0.29; Amount of $Cl_2$ used until detection (g/100 g cat.): 0.27; Amount $Cl_2$ used beyond detection: 0.47.

[c] Chlorine mass flow rate (g/100 g cat./hr.); 0.36; no chlorine was detected at reactor exit at end of run; Amount of $Cl_2$ used at end of run (g/100 g cat.), 2.35.

[d] Chlorine mass flow rate (g/100 g cat./hr.): 2.0; Amount of $Cl_2$ used until detection (g/100 g cat.): 3.1; Amount $Cl_2$ used beyond detection: 2.0.

# EP 0 093 621 B1

## Claims

1. A process for reactivating a catalyst comprising metallic iridium in an agglomerated state, which comprises the steps of:

(a) pretreating the catalyst by contact with a substantially elemental oxygen-free atmosphere comprising a halide-providing compound at a temperature of from 250 to 600°C and which compound provides halide to the catalyst at the pretreating conditions; and

(b) redispersing the pretreated catalyst from step (a) by contact, at a temperature in the range of from 450 to 600°C, with a gas-phase redispersing agent selected from elemental halogen, elemental oxygen, a mixture containing hydrogen halide and elemental oxygen, and a mixture of at least two of the foregoing, and which redispersing agent may optionally comprise water vapour, for a time sufficient to redisperse agglomerated iridium, wherein the pretreating step (a) is effected to provide on the catalyst at least 1.3 weight percent halogen, based on coke-free dry catalyst, and in the redispersing step (b) there is maintained on the catalyst a halogen content, based on coke-free dry catalyst, of at least 1.3 weight percent halogen.

2. A process as in claim 1 wherein said halide-providing compound is hydrogen chloride.

3. A process as in claim 1 or claim 2 wherein at the end of the pretreatment of step (a), said catalyst is substantially saturated with said halide.

4. A process according to any one of claims 1 to 3 in which the dispersing agent used in step (b) comprises hydrogen chloride and oxygen.

5. A process as in any one of claims 1 to 4 wherein prior to performing step (b), the catalyst comprises from about 1.4 to about 2.5 weight percent of halide, based on coke-free, dry catalyst.

6. A process as in any one of claims 1 to 4 wherein step (a) is performed to provide said catalyst with about 1.6 weight percent or greater of halide, based on coke-free dry catalyst, and step (b) is effected by contact with elemental oxygen.

7. A process as in claim 6 wherein when said step (b) is performed using elemental oxygen as the redispersing agent, the halide content of the catalyst is maintained at 1.6 weight percent or greater.

8. A process as in any one of claims 1 to 7 wherein said contacting in step (b) with elemental halogen is performed at a halogen mass flow-rate of less than about one gram of elemental halogen per 100 g of catalyst per hour.

9. A process as in any one of claims 1 to 8 wherein said elemental halogen in step (b) is chlorine.

10. A process as in any one of claims 1 to 9 wherein a coked iridium-containing catalyst is reactivated and steps (a) and (b) are preceded by:

(i) at least partially decoking said coked catalyst in an oxygen-containing atmosphere at an elevated temperature; and

(ii) reducing the catalyst from step (i) by contact with a reducing atmosphere for a sufficient time to convert iridium values to metallic iridium.

11. A process as in claim 10 wherein step (i) is performed at a temperature of below 430°C and for a sufficient time until the coke content of the catalyst is less than 1 weight percent and the iridium agglomeration on the catalyst is less than 50%.

12. A process as in claim 11 wherein step (b) is performed with a redispersing gas comprising elemental halogen and water vapour at a temperature of about 480°C or above for a time sufficient to substantially complete decoking and to redisperse said metallic iridium.

13. A process as in any one of claims 1 to 12 wherein partially or completely decoked agglomerated iridium-containing catalysts arranged in series are reactivated, steps (a) and (b) are preceded by reducing a first of said catalysts by contact with a reducing atmosphere at an elevated temperature for a sufficient time to convert iridium values to metallic iridium, and steps (a) and (b) are followed by step (c) wherein a second of said catalysts is contacted with halogen/water vapour effluent from the step (b) performed on the first of the catalysts to partially decoke the said second of the catalysts.

14. A process as in claim 13 wherein the redispersing gas in step (b) for the first of the catalysts in the series includes water vapour.

15. A process as in any one of claims 1 to 14 wherein the catalyst comprises platinum and iridium supported on alumina.

## Patentansprüche

1. Verfahren zur Reaktivierung eines metallisches Iridium in einem agglomerierten Zustand enthaltenden Katalysators, bei dem

(a) der Katalysator durch Kontakt mit einer im wesentlichen von elementarem Sauerstoff freien Atmosphäre, die eine Halogenid liefernde Verbindung enthält, bei einer Temperatur von 250 bis 600°C vorbehandelt wird, wobei die Verbindung unter den Vorbehandlungsbedingungen Halogenid an den Katalysator abgibt, und

(b) der vorbehandelte Katalysator aus Schritt (a) durch Kontakt mit einem Gasphasenredispergierungsmittel, das aus elementarem Halogen, elementarem Sauerstoff, einer Halogenwasserstoff und elementaren Sauerstoff enthaltenden Mischung und einer Mischung von zumindest zwei der zuvor

23

EP 0 093 621 B1

genannten Substanzen ausgewählt ist und gegebenenfalls Wasserdampf enthalten kann, bei einer Temperatur im Bereich von 450 bis 600°C ausreichend lange redispergiert wird, um das agglomerierte Iridium zu redispergieren, wobei die Vorbehandlungsstufe (a) durchgeführt wird, um bezogen auf den koksfreien trocknen Katalysator zumindest 1,3 Gew.% Halogen auf dem Katalysator zur Verfügung zu stellen, und in der Redispergierungsstufe (b) bezogen auf den koksfreien trocknen Katalysator ein Halogengehalt auf dem Katalysator vom zumindest 1,3 Gew.% Halogen aufrechterhalten wird.

2. Verfahren nach Anspruch 1, bei dem die Halogenid liefernde Verbindung Chlorwasserstoff ist.

3. Verfahren nach Anspruch 1 oder 2, bei dem der Katalysator am Ende der Vorbehandlung von Stufe (a) im wesentlichen mit dem Halogenid gesättigt ist.

4. Verfahren nach einem der Ansprüche 1 bis 3, bei dem das in Stufe (b) verwendete Dispergierungsmittel Chlorwasserstoff und Sauerstoff umfaßt.

5. Verfahren nach einem der Ansprüche 1 bis 4, bei dem der Katalysator vor der Durchführung der Stufe (b) bezogen auf den koksfreien trockenen Katalysator etwa 1,4 bis etwa 2,5 Gew.% Halogenid enthält.

6. Verfahren nach einem der Ansprüche 1 bis 4, bei dem Stufe (a) durchgeführt wird, um den Katalysator, bezogen auf den koksfreien trocknen Katalysator, mit etwa 1,6 Gew.% oder mehr Halogenid auszustatten, und Stufe (b) durch Kontakt mit elementarem Sauerstoff ausgeführt wird.

7. Verfahren nach Anspruch 6, bei dem der Halogenidgehalt des Katalysators auf 1,6 Gew.% oder mehr gehalten wird, wenn Stufe (b) unter Verwendung von elementarem Sauerstoff als das Redispergierungsmittel durchgeführt wird.

8. Verfahren nach einem der Ansprüche 1 bis 7, bei dem das Kontaktieren mit elementarem Halogen in Stufe (b) bei einer Halogenmassenflußgeschwindigkeit von weniger als etwa 1 g elementares Halogen pro 100 g Katalysator pro Stunde durchgeführt wird.

9. Verfahren nach einem der Ansprüche 1 bis 8, bei dem das elementare Halogen in Stufe (b) Chlor ist.

10. Verfahren nach einem der Ansprüche 1 bis 9, bei dem ein verkokter iridiumhaltiger Katalysator reaktiviert wird und den Stufen (a) und (b)

(i) eine zumindest teilweise Entkokung des verkokten Katalysators in einer sauerstoffhaltigen Atmosphäre bei einer erhöhten Temperatur und

(ii) eine Reduktion des Katalysators aus Stufe (i) durch ausreichend langen Kontakt mit einer reduzierenden Atmosphäre zur Umwandlung von Iridiumverbindungen in metallisches Iridium vorausgehen.

11. Verfahren nach Anspruch 10, bei dem Stufe (i) bei einer Temperatur von unterhalb 430°C und ausreichend lange durchgeführt wird, bis der Koksgehalt des Katalysators kleiner als 1 Gew.% ist und die Iridiumagglomeration auf dem Katalysator weniger als 50% beträgt.

12. Verfahren nach Anspruch 11, bei dem Stufe (b) mit einem elementares Halogen und Wasserdampf umfassenden Redispergierungsgas bei einer Temperatur von etwa 480°C oder mehr ausreichend lange durchgeführt wird, umd die Entkokung im wesentlichen zu vervollständigen und das metallische Iridium zu redispergieren.

13. Verfahren nach einem der Ansprüche 1 bis 12, bei dem teilweise oder vollständig entkokte, agglomeriertes Iridium enthaltende Katalysatoren, die in Reihe angeordnet sind, reaktiviert werden, wobei den Stufen (a) und (b) die Reduktion eines ersten der Katalysatoren durch genügend langen Kontakt mit einer reduzierenden Atmosphäre bei einer erhöhten Temperatur vorausgeht, um Iridiumverbindungen in metallisches Iridium umzuwandeln, und den Stufen (a) und (b) Stufe (c) folgt, in der ein zweiter der Katalysatoren mit Halogen/Wasserdampf-Abfluß aus Stofe (b), der der erste der Katalysatoren unterworfen worden ist, zur teilweisen Entkokung des zweiten der Katalysatoren kontaktiert wird.

14. Verfahren nach Anspruch 13, bei dem das Redispergierungsgas in Stufe (b) für den ersten der Katalysatoren in der Reihe Wasserdampf enthält.

15. Verfahren nach einem der Ansprüche 1 bis 14, bei dem der Katalysator auf Aluminiumoxid als Träger aufgebrachtes Platin und Iridium umfaßt.

## Revendications

1. Procédé de réactivation d'un catalyseur comprenant de l'iridium métallique à l'état aggloméré, comprenant les étapes consistant:

(a) à prétraiter le catalyseur par contact avec une atmosphère pratiquement exempte d'oxygène élémentaire, comprenant un composé donneur d'halogénure à une température de 250 à 600°C, lequel composé apporte un halogénure au catalyseur dans les conditions du prétraitement; et

(b) à redisperser le catalyseur prétraité provenant de l'étape (a), par contact, à une température dans l'intervalle de 450 à 600°C, avec un agent redispersant en phase aqueuse choisi dans le groupe comprenant les halogènes élémentaires, l'oxygène élémentaire, un mélange contenant un halogénure d'hydrogène et de l'oxygène élémentaire, et un mélange d'au moins deux des agents ci-dessus, lequel agent redispersant pouvant facultativement comprendre de la vapeur d'eau, et ce pendant un temps suffisant pour redisperser l'iridium aggloméré, où l'étape de prétraitement (a) est mise en oeuvre de façon à apporter au catalyseur au moins 1,3% en poids d'halogène, par rapport au catalyseur sec exempt de coke, et où, dans l'étape de redispersion (b), on maintient la teneur du catalyseur en halogène, par rapport au catalyseur sec excempt de coke, à au moins 1,3% en poids d'halogène.

24

2. Procédé selon la revendication 1, dans lequel le composé donneur d'halogénure est le chlorure d'hydrogène.

3. Procédé selon la revendication 1 ou la revendication 2, dans lequel, à la fin du prétraitement de l'étape (a), ledit catalyseur est pratiquement saturé en ledit halogénure.

4. Procédé selon l'une quelconque des revendications 1 à 3, dans lequel l'agent dispersant utilisé dans l'étape (b) comprend du chlorure d'hydrogène et de l'oxygène.

5. Procédé selon l'une quelconque des revendications 1 à 4, dans lequel, avant de réaliser l'étape (b), le catalyseur comprend d'environ 1,4 à environ 2,5% en poids d'halogénure, par rapport au catalyseur sec exempt de coke.

6. Procédé selon l'une quelconque des revendications 1 à 4, dans lequel l'étape (a) est mise en oeuvre de façon à apporter audit catalyseur environ 1,6% en poids ou plus d'halogénure, par rapport au catalyseur sec exempt de coke, et où l'étape (b) est mise en oeuvre par contact avec de l'oxygène élémentaire.

7. Procédé selon la revendication 6, dans lequel, quand ladite étape (b) est mise en oeuvre à l'aide d'oxygène élémentaire en tant qu'agent redispersant, la teneur du catalyseur en halogénure est maintenue à 1,6% en poids ou plus.

8. Procédé selon l'une quelconque des revendications 1 à 7, dans lequel ladite mise en contact avec un halogène élémentaire, dans l'étape (b), est mise en oeuvre pour un débit massique d'halogène inférieur à environ 1 g d'halogène élémentaire par 100 g de catalyseur par heure.

9. Procédé selon l'une quelconque des revendications 1 à 8, dans lequel ledit halogène élémentaire de l'étape (b) est le chlore.

10. Procédé selon l'une quelconque des revendications 1 à 9, dans lequel on réactive un catalyseur contenant de l'iridium, ainsk que du coke, et les étapes (a) et (b) sont précédées des opérations suivantes:

(i) une élimination au moins partielle du coke dudit catalyseur contenant du coke, dans une atmosphère contenant de l'oxygène, à température élevée; et

(ii) une réduction du catalyseur de l'étape (i), par contact avec une atmosphère réductrice, pendant un temps suffisant pour convertir l'iridium en iridium métallique.

11. Procédé selon la revendication 10, dans lequel l'étape (i) est mise en oeuvre à une température inférieure à 430°C et pendant un temps suffisant pour que la teneur en coke du catalyseur soit inférieure à 1% en poids, et que le taux d'agglomération de l'iridium sur le catalyseur soit inférieure à 50%.

12. Procédé selon la revendication 11, dans lequel l'étape (b) est mise en oeuvre avec un gaz redispersant comprenant un halogène élémentaire et de la vapeur d'eau, à une température d'environ 480°C ou plus, pendant un temps suffisant pour supprimer la presque totalité du coke et pour redisperser ledit iridium métallique.

13. Procédé selon l'une quelconque des revendications 1 à 12, dans lequel des catalyseurs contenant de l'iridium, agglomérés, dont le coke a été partiellement ou entièrement éliminé, et disposés en série, sont réactivés, les étapes (a) et (b) sont précédées d'une réduction d'un premier de ces catalyseurs, par contact avec une atmosphère réductrice à une température élevée et pendant un temps suffisant pour convertir les valeurs d'iridium en iridium métallique, les étapes (a) et (b) étant suivies d'une étape (c) dans laquelle en deuxième de ces catalyseurs est mis en contact avec l'effluent halogène/vapeur d'eau provenant de l'étape (b) appliquée au premier des catalyseurs, pour éliminer partiellement le coke dudit deuxième catalyseur.

14. Procédé selon la revendication 13, dans lequel le gas redispersant de l'étape (b), qui s'applique au premier des catalyseurs de la série, comprend de la vapeur d'eau.

15. Procédé selon l'une quelconque des revendications 1 à 14, dans lequel le catalyseur comprend du platine et de l'iridium sur un support d'alumine.